# EUROPÄISCHE PATENTSCHRIFT

(11) **EP 1 020 067 B1**
(45) Veröffentlichungstag und Bekanntmachung des Hinweises auf die Patenterteilung: **07.11.2007**
(21) Anmeldenummer: 98954128.9
(22) Anmeldetag: 07.09.1998
(51) Int. Cl.: H04M 3/50, H04Q 3/22

(54) **VERFAHREN ZUM MELDEN EINER NACHRICHT AN EINEN TEILNEHMER**
METHOD FOR ANNOUNCING A MESSAGE TO A SUBSCRIBER
PROCEDE POUR ANNONCER UN MESSAGE A UN ABONNE

(30) Priorität: 30.09.1997 DE 19743241
(43) Veröffentlichungstag der Anmeldung: 19.07.2000
(73) Patentinhaber: SIEMENS AKTIENGESELLSCHAFT, 80333 München (DE)
(72) Erfinder: SCOTTO DI CARLO, Vincenzo, D-81739 München (DE); SCHULZ, Egon, D-80993 München (DE)
(86) Internationale Anmeldenummer: PCT/DE1998/002629
(87) Internationale Veröffentlichungsnummer: WO 1999/017521

(56) Entgegenhaltungen:
- EP-A- 0 823 809
- WO-A-92/14330
- WO-A-97/33421
- US-A- 4 837 798

## Beschreibung

Die Erfindung betrifft ein Verfahren zum Melden einer Nachricht an einen Teilnehmer, der an mindestens zwei Nachrichtendiensten angemeldet ist.

In vielen Kommunikationsnetzen, wie beispielsweise ISDN-Netzen, GSM-Netzen, privaten Netzen und Datennetzen, sind Nachrichtendienste für Sprach- oder Textnachrichten verfügbar, siehe z.B. WO-A-92 14 330. Wenn eine Nachricht bei einem dieser Nachrichtendienste eintrifft, wird der Teilnehmer geeignet informiert, beispielsweise durch eine optische Anzeige und/oder einen akustischen Aufmerksamkeitston.

Die Nachrichtendienste sind jedoch voneinander unabhängig und signalisieren das Eintreffen einer Nachricht nur auf bestimmten Endgeräten. Beispielsweise wird eine Nachricht im ISDN-Dienst nur auf dem stationären ISDN-Telefon des Benutzers angezeigt, oder eine GSM-Nachricht nur auf dem GSM-Endgerät. Der Benutzer erhält daher möglicherweise wichtige Nachrichten nicht, wenn er gerade keinen Zugriff auf das entsprechende Endgerät hat. Bei stationären Endgeräten kann sich der Benutzer nicht immer beim Endgerät aufhalten. Ähnliches gilt für Endgeräte wie schnurlose Telefone, die nur in einem räumlich eng begrenzten Bereich arbeiten. Mobile Endgeräte wie Funktelefone könnte der Benutzer zwar theoretisch ständig mit sich führen; dies ist jedoch unpraktisch, wenn es sich um mehrere Nachrichtendienste und dementsprechend viele mobile Endgeräte handelt.

Manche Nachrichtendienste bieten eine Fernzugriffsmöglichkeit an. Beispielsweise kann sich ein E-Mail-Teilnehmer üblicherweise mittels eines Computers und eines Modems in ein betriebliches Datennetz einwählen und sein Postfach überprüfen. Eine derartige Abfrage mittels Fernzugriff gewährleistet aber nicht, daß der Benutzer wichtige Nachrichten sofort erhält. Überdies verursacht jede Abfrage einen gewissen Zeit- und Kostenaufwand. Dieser fällt insbesondere dann unangenehm ins Gewicht, wenn eine Abfrage nur das Resultat erbringt, daß keine Nachrichten vorliegen.

Die Erfindung hat demgemäß die Aufgabe, die genannten Probleme zu lösen und ein Verfahren zum Melden einer Nachricht an einen Teilnehmer bereitzustellen, durch das auch ein an mehreren Nachrichtendiensten angemeldeter Teilnehmer möglichst zuverlässig, schnell und problemlos von dem Vorliegen einer neuen Nachricht informiert werden kann.

Erfindungsgemäß wird diese Aufgabe durch ein Verfahren mit den Merkmalen des Anspruchs 1 gelöst. Die weiteren Ansprüche betreffen vorteilhafte Weiterbildungen der Erfindung.

Die Erfindung beruht auf der Grundidee, einen gemeinsamen Meldungsserver vorzusehen, dem jeder Nachrichtendienst das Vorliegen einer neuen Nachricht für den Teilnehmer anzeigt. Der Meldungsserver stellt gleichsam die Verbindung der mehreren Nachrichtendienste her, indem er eine geeignete Meldung an mindestens ein Endgerät des Teilnehmers übermittelt. Diese Meldung beinhaltet zumindest die Information, daß eine neue Nachricht vorliegt, und in welchem Nachrichtendienst dies der Fall ist.

Durch die Erfindung ist es möglich, Informationen über das Vorliegen von neuen Nachrichten an ein geeignetes Endgerät des Teilnehmers oder an mehrere Endgeräte des Teilnehmers weiterzuleiten. Beispielsweise können die Meldungen an ein einziges Dualmodus-Funktelefon des Teilnehmers gesendet werden. Der Teilnehmer braucht dann nur dieses eine Gerät mit sich zu führen, um hinsichtlich neuer Nachrichten ständig auf dem aktuellen Stand zu sein. Wenn die Meldungen an mehrere Endgeräte des Teilnehmers geleitet werden, braucht sich der Teilnehmer nur bei einem dieser Endgeräte aufzuhalten, beispielsweise entweder bei seinem stationären Bürotelefon oder bei seinem Heimtelefon. In allen Fällen erhält der Teilnehmer die gewünschten Informationen schnell und zuverlässig.

Der erfindungsgemäß vorgesehene Meldungsserver bedient alle diejenigen Nachrichtendienste des Teilnehmers, bei denen eine Meldung neu eingehender Nachrichten erfolgen soll. Das heißt nicht notwendigerweise, daß der Meldungsserver physisch eine einzige Baugruppe ist. Vielmehr kann der Meldungsserver aus mehreren miteinander vernetzten Computern oder sonstigen Systemen gebildet sein. Relevant ist nur, daß durch das Zusammenwirken dieser Systeme die Funktionen des Meldungsservers bereitgestellt werden.

In bevorzugten Ausführungsformen werden die von einem Nachrichtendienst stammenden Daten im Meldungsserver mindestens teilweise und zumindest bis zu einer erfolgreichen Übermittlung der entsprechenden Meldung gespeichert. Dies erhöht die Zuverlässigkeit des Verfahrens, weil eine Meldung wiederholt an ein Endgerät des Teilnehmers gesendet werden kann. Überdies kann in diesem Fall auch eine Zugriffsmöglichkeit des Teilnehmers auf gespeicherte Meldungen von beliebigen Endgeräten aus - nach einer Berechtigungsprüfung - vorgesehen sein.

In bevorzugten Ausgestaltungen übermittelt der Meldungsserver die Meldungen an alle Endgeräte des Teilnehmers oder an mindestens ein vom Teilnehmer auswählbares Endgerät. Diese Auswahl erfolgt bevorzugt durch den Teilnehmer mittels des auszuwählenden Endgeräts.

Der Meldungsserver kann dem Teilnehmer nur die Information übermitteln, in welchem Nachrichtendienst eine neue Nachricht vorliegt. Vorzugsweise erhält der Teilnehmer jedoch weitere Informationen, die der Meldungsserver aus einer Nachrichtenkopfinformation entnimmt. Die Nachrichtenkopfinformation kann dem Meldungsserver von den Nachrichtendiensten entweder bei jedem Vorliegen einer neuen Nachricht oder nur auf Anforderung übermittelt werden.

In bevorzugten Ausgestaltungen der Erfindung bearbeitet der Meldungsserver die von den Nachrichtendiensten stammenden Daten, indem er sie unter anderem filtert und/oder ordnet und/oder formatiert. Die Meldung an den Teilnehmer kann mittels einer Signalisierung und/oder durch einen Rufaufbau übermittelt werden.

Mehrere Ausführungsbeispiele und Ausführungsalternativen der Erfindung werden nun unter Hinweis auf die Zeichnungen beschrieben.

Es stellen dar :
- Figur 1: eine schematische Darstellung der Kommunikationswege in einem ersten Ausführungsbeispiel,
- Figur 2: eine schematische Darstellung der Kommunikationswege in einem zweiten Ausführungsbeispiel, und
- Figur 3: eine schematische Darstellung des Datenflusses in einem Meldungsserver in einem dritten Ausführungsbeispiel.

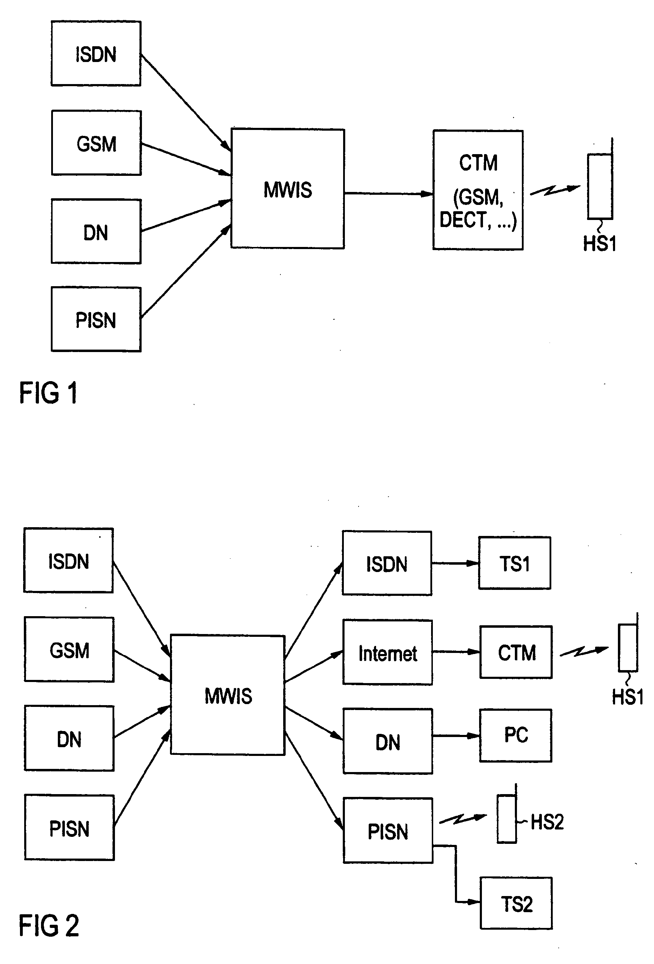

In Fig. 1 ist ein Meldungsserver MWIS dargestellt, der Informationen von Nachrichtendiensten mehrerer Kommunikationsnetze, nämlich einem ISDN-Netz (ISDN = Integrated Services Digital Network), einem GSM-Netz (GSM = Global System for Mobile Communications), einem Datennetz DN, und einem im folgenden als PISN bezeichneten privaten Netz erhält.

Im ISDN-Netz sind als Endgeräte stationäre ISDN-Telefone vorgesehen, und es stehen Nachrichtendienste für Text- und Sprachnachrichten zur Verfügung. Das GSM-Netz weist GSM-Funktelefone als Endgeräte auf. Als Nachrichtendienste stehen ein Dienst für Text-Kurznachrichten (SMS = Short Message Service) und diverse anbieterabhängige Sprachnachrichtendienste zur Verfügung. An das private Netz PISN können schnurgebundene oder schnurlose Telefone angeschlossen sein; letztere insbesondere nach dem DECT-Standard (DECT = Digital Enhanced Cordless Communications). Auch für DECT-Telefone ist ein Text-Kurznachrichtendienst verfügbar, und je nach den Leistungsmerkmalen des privaten Netzes PISN können weitere Nachrichtendienste vorgesehen sein. Schließlich wird in dem Datennetz DN, das als betriebliches Datennetz ausgestaltet sein kann, ein E-Mail-Dienst für elektronische Post angeboten, mit dem sich beliebige digitale Daten versenden lassen. Auf den E-Mail-Dienst kann über lokal an das Datennetz DN angeschlossene Computer zugegriffen werden. Außerdem ist eine Einwahl in das Datennetz DN über ein Telefonnetz mittels eines tragbaren Computers möglich.

Die aufgeführten Nachrichtendienste - und in Ausführungsalternativen weitere Dienste - zeigen dem Meldungsserver MWIS jede für einen Teilnehmer neu eintreffende Nachricht an, indem sie eine entsprechende Information an den Meldungsserver MWIS übertragen. Die Art der Datenübertragung hängt von dem Nachrichtendienst ab. Beispielsweise erfolgt eine Nachrichtenanzeige aus dem GSM-Netz mittels einer speziellen Nachrichtenindikation (MWI = message waiting indication) oder mittels einer an den Meldungsserver MWIS übertragenen Text-Kurznachricht. Von dem Datennetz DN können solche Nachrichtenanzeigen in Form einer E-Mail an den Meldungsserver MWIS gelangen. Wenn der Nachrichtenserver durch eine ISDN-Leitung mit dem ISDN-Netz oder einem anderen Netz verbunden ist, können geeignete Signalisierungen auf dem D-Kanal übertragen werden. Diese und andere Kommunikationsmöglichkeiten sind an sich bekannt und teilweise standardisiert. Sie werden daher hier nicht im einzelnen beschrieben.

In dem hier beschriebenen ersten Ausführungsbeispiel erhält der Meldungsserver MWIS von den einzelnen Nachrichtendiensten lediglich die Information, daß eine neue Nachricht vorliegt. Ferner kann der Meldungsserver MWIS den sendenden Nachrichtendienst entweder aus dem Port, über den die Information eingeht, oder aus der Information ermitteln. In dem hier beschriebenen ersten Ausführungsbeispiel erhält der Meldungsserver MWIS keine weiteren Informationen von den Nachrichtendiensten. In Ausführungsalternativen werden dem Meldungsserver MWIS dagegen weitere Informationen übermittelt, beispielsweise Nachrichtenkopfinformationen, die Angaben über den Absender der Nachricht, den Betreff, Sendedatum und Uhrzeit und so weiter enthalten. Diese Nachrichtenkopfinformationen können auch erst auf eine besondere Anforderung des Meldungsservers MWIS an diesen gesendet-werden.

Der Meldungsserver MWIS speichert die von den Nachrichtendiensten empfangenen Informationen und generiert für jede Nachrichtenanzeige eine Meldung, die dem Teilnehmer das Vorliegen einer Nachricht und den Nachrichtendienst, bei dem diese Nachricht vorliegt, anzeigt. In dem in Fig. 1 gezeigten ersten Ausführungsbeispiel ist diese Meldung eine GSM-SMS-Nachricht, die über ein Netz nach dem Standard CTM Phase 2 (CTM = Cordless Terminal Mobility) an ein Dualmodus-Funktelefon HS1 des Teilnehmers übertragen wird. Das Dualmodus-Funktelefon HS1 ist eine Kombination eines GSM- und eines DECT-Telefons, das der Teilnehmer ständig mit sich führen kann. Das CTM-Netz umfaßt sowohl GSM- als auch DECT-Netze, und die von dem Meldungsserver abgesetzte GSM-SMS-Meldung wird innerhalb dieser Netze automatisch an das Dualmodus-Funktelefon HS1 geleitet. Der Teilnehmer kann daher die Meldung innerhalb eines sehr großen räumlichen Bereichs empfangen. Als Reaktion auf den Empfang der Meldung kann der Teilnehmer, wenn er es für erforderlich erachtet, nun die Nachricht bei dem in der Meldung genannten Nachrichtendienst abholen.

Bei dem in Fig. 2 gezeigten zweiten Ausführungsbeispiel erhält der Meldungsserver MWIS die Nachrichtenanzeigen von den Nachrichtendiensten auf die bereits beschriebene Weise. Im Gegensatz zu Fig. 1 sind hier aber mehrere Teilnehmerendgeräte vorgesehen, an die die Nachrichtenmeldungen übermittelt werden können.

Genauer gesagt, kann der Meldungsserver MWIS eine Meldung mittels einer Signalisierung auf dem ISDN-D-Kanal über das ISDN-Netz an ein leitungsgebundenes ISDN-Telefon TS1 des Teilnehmers senden. Eine Meldungsübertragüng über das CTM-Netz an das bereits in Fig. 1 gezeigte Dualmodus-Funktelefon HS1 ist ebenfalls möglich. In Fig. 2 greift der Meldungsserver MWIS jedoch nicht direkt auf das CTM-Netz zu, sondern die Meldung wird an das Internet abgesetzt und von dort als GSM-SMS-Nachricht zum CTM-Netz weitergeleitet. Ferner ist der Meldungsserver dazu eingerichtet, Meldungen in Form von E-Mail-Nachrichten über das Datennetz DN an einen persönlichen Computer PC des Benutzers zu übertragen. Schließlich kann der Meldungsserver auch Meldungen in Form von Signalisierungen, Text oder synthetisierter Sprache über das private Netz PISN an ein DECT-Telefon HS1 und ein stationäres Telefon TS2 senden. Die Verteilung von eingehenden Meldungen zwischen dem DECT-Telefon HS1 und dem stationären Telefon TS2 erfolgt durch das private Netz PISN.

In dem hier beschriebenen zweiten Ausführungsbeispiel leitet der Meldungsserver MWIS für jede eingehende Nachrichtenanzeige eine entsprechende Meldung an alle angeschlossenen Endgeräte des Teilnehmers weiter. Damit ist der Teilnehmer immer erreichbar, wenn er nur Zugriff auf eines dieser Endgeräte hat. Bei dem in Fig. 2 gezeigten System ist der Meldungsserver MWIS auf seinen Eingangs- und Ausgangsseiten zum Teil mit denselben Netzen verbunden. In diesem Fall wird die Meldung nicht an dasjenige Endgerät gesendet, von dem die gemeldete Nachricht stammt.

Zur Übermittlung der Meldung an das ISDN-Telefon TS1 wird eine Nachrichtenindikation (MWI) gemäß dem ISDN-Standard übermittelt. Dabei können die Anzahl der wartenden Nachrichten und ihre Art angegeben werden. In dem privaten Netz PISN kann eine Nachrichtenindikation ähnlich wie im ISDN-Netz übertragen werden, wenn das private Netz PISN und das DECT-Telefon HS2 den CAP-Standard (CAP = CTM Access Profile) unterstützen. Im GSM-Netz wird, wie bereits beschrieben, eine Kurz-Textnachricht gesendet, um auch auf dem GSM-Telefon HS1 eine optische und/oder akustische Nachrichtenindikation auszulösen. In Ausführungsalternativen kann die Meldung bei allen Endgeräten, die eine Sprachübertragung unterstützen, mittels eines Rufaufbaus übertragen werden. Der Teilnehmer erhält dann einen Anruf, in dem ihm mit synthetischer Sprache das Vorliegen einer Nachricht in einem bestimmten Nachrichtendienst mitgeteilt wird.

In weiteren Ausführungsalternativen wird die Meldung nicht an alle Endgeräte des Teilnehmers übertragen, sondern nur an eines oder einige dieser Endgeräte. Die Auswahl der Endgeräte kann zentral, beispielsweise durch einen Systemadministrator, erfolgen. Es ist jedoch auch möglich, daß der Teilnehmer selbst die Auswahl vornimmt. Dazu kann er von einem seiner Endgeräte eine geeignete Steuerinformation an den Meldungsserver übertragen. Die Steuerinformation kann die Adressen (beispielsweise Telefonnummern) derjenigen Endgeräte enthalten, an die die Meldungen geleitet werden sollen. Als Alternative kann vorgesehen sein, daß der Meldungsserver MWIS zukünftige Meldungen nur oder auch an das Endgerät leitet, von dem die letzte empfangene Steuerinformation stammt. Der Teilnehmer kann dann durch eine einfache Anwahl des Meldungsservers ein Endgerät als Meldungsempfänger registrieren.

In weiteren Ausführungsalternativen sind gegenüber der Darstellung von Fig. 2 andere oder zusätzliche Kommunikationswege und Endgeräte vorgesehen. Insbesondere werden Möglichkeiten bereitgestellt, durch die der Teilnehmer für ihn vorliegende Meldungen von einem beliebigen Endgerät aus beim Meldungsserver MWIS abfragen kann. Beispielsweise kann vorgesehen sein, daß der Teilnehmer den Meldungsserver MWIS von einem öffentlichen Telefon aus anwählen kann und dann die Meldungen mittels Sprachausgabe erhält. Wenn der Teilnehmer einen Mobilcomputer mit Modem oder einen Internetzugang benutzt, um direkt auf den Meldungsserver MWIS zuzugreifen, werden die Meldungen in Textform ausgegeben. In allen diesen Fällen ist in der Regel eine Berechtigungsprüfung des Teilnehmers, zum Beispiel mittels eines Paßwortes, erforderlich.

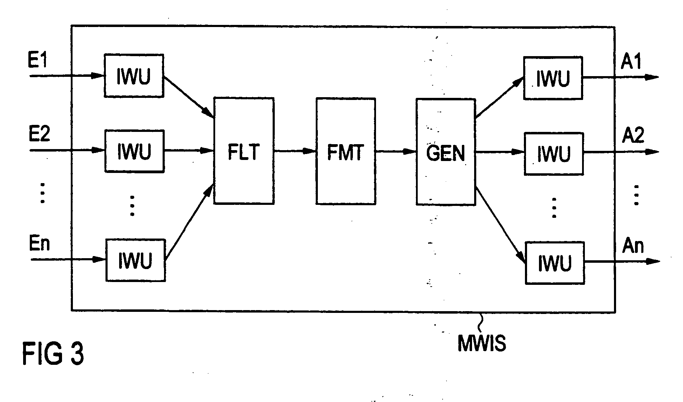

Der Datenfluß in einem Meldungsserver MWIS ist in Fig. 3 genauer dargestellt. Wie bereits beschrieben, weist der Meldungsserver MWIS Eingänge E1, E2, ..., En für Nachrichtenanzeigen von Nachrichtendiensten und Ausgänge A1, A2, ..., An für Meldungen an Endgeräte der Teilnehmer auf. Die Ein- und Ausgänge sind, wie in Fig. 1 und Fig. 2 gezeigt, mit unterschiedlichen Kommunikationsnetzen und Nachrichtendiensten verbunden. Für jeden Ein- und Ausgang ist im Meldungsserver MWIS eine Schnittstellenanpaßeinrichtung IWU (interworking unit) vorgesehen, die die erforderlichen Anpaßfunktionen zum Nachrichtenaustausch mit den Nachrichtendiensten vornimmt.

Der Meldungsserver MWIS von Fig. 3 ist zur Verwendung in einem dritten Ausführungsbeispiel der Erfindung vorgesehen, bei dem zumindest einige der Nachrichtendienste beim Vorliegen einer neuen Nachricht eine umfangreiche Nachrichtenkopfinformation an den Meldungsserver MWIS übermitteln.

Die von den Nachrichtendiensten eingehenden Nachrichtenanzeigen werden von den Schnittstellenanpaßeinrichtungen IWU an eine Filtereinrichtung FLT geleitet. Die Filtereinrichtung FLT bestimmt nach vorgegebenen oder vom Teilnehmer eingestellten Kriterien, für welche neuen Nachrichten eine Meldung an den Benutzer ausgegeben werden soll. Solche Kriterien können, je nachdem, welche Informationstypen die Nachrichtenanzeigen enthalten, insbesondere die Priorität der neuen Nachrichten, die durch den Namen oder die Telefonnummer bestimmte Identität des Senders oder Schlüsselworte in einer Titel- oder Betreffangabe der Nachrichtenkopfinformation sein. Zum Beispiel kann der Teilnehmer festlegen, daß für Nachrichten von bestimmten Absendern keine Meldung erzeugt werden soll, oder daß nur für Nachrichten von bestimmten Absendern eine Meldung erzeugt werden soll. Die Filtereinrichtung FLT kann in Ausführungsalternativen auch die eingehenden Nachrichtenanzeigen nach ihrer Priorität ordnen.

Die gefilterten Nachrichtenanzeigen werden nun einer Formatierungseinrichtung FMT zugeleitet. Die Formatierungseinrichtung FMT extrahiert aus den Nachrichtenanzeigen diejenigen Informationen, die der Teilnehmer mit der Meldung erhalten soll. Dies kann vorab oder durch den Teilnehmer festgelegt werden. Beispielsweise kann der Teilnehmer bestimmen, daß er nur den Absendernamen und den Nachrichtentitel erhalten möchte. In Ausführungsalternativen kann die Formatierungseinrichtung FMT mehrere Formatierungsmuster anbieten, die in Abhängigkeit von den Fähigkeiten des Endgerätes oder der Endgeräte, an die die Meldung gesendet werden soll, auswählbar sind. Zum Beispiel kann festgelegt sein, daß eine als Kurz-Textnachricht übermittelte Meldung mehr Informationen aufweisen soll als eine Nachrichtenindikation nach dem ISDN-Standard. In weiteren Ausführungsalternativen können die zum Empfang der Meldung vorgesehenen Endgeräte in Abhängigkeit von den mit der Meldung zu übertragenden Informationen ausgewählt werden.

Die eigentlichen Meldungen werden schließlich von einer Generierungseinrichtung GEN erzeugt. Je nach der Art des Endgerätes, an das die Meldung übertragen wird, erstellt die Generierungseinrichtung GEN aus den von der Formatierungseinrichtung FMT stammenden Informationen eine Textmeldung oder eine Sprachmeldung in synthetischer Sprache. Die von der Generierungseinrichtung GEN ausgegebene Meldung wird schließlich über die Schnittstellenanpaßeinrichtungen IWU und die mit dem Meldungsserver MWIS verbundenen Kommunikationsnetze an das gewünschte Endgerät oder die gewünschten Endgeräte des Teilnehmers ausgegeben.

## Patentansprüche

1. Verfahren zum Melden einer Nachricht an einen Teilnehmer, der an mindestens zwei Nachrichtendiensten angemeldet ist, wobei :
a) jeder Nachrichtendienst einem gemeinsamen Meldungsserver (MWIS) zumindest das Vorliegen einer neuen Nachricht für den Teilnehmer bei diesem Nachrichtendienst anzeigt, und
b) der Meldungsserver (MWIS) an mindestens ein Endgerät (HS1, HS2, TS1, TS2, PC) des Teilnehmers eine Meldung übermittelt, die zumindest beinhaltet, daß und in welchem Nachrichtendienst die neue Nachricht vorliegt.

2. Verfahren nach Anspruch 1,
**dadurch gekennzeichnet,**
**daß**, wenn ein Nachrichtendienst das Vorliegen einer neuen Nachricht anzeigt, der Meldungsserver (MWIS) die vom Nachrichtendienst stammenden Daten mindestens teilweise und zumindest bis zu einer erfolgreichen Übermittlung der entsprechenden Meldung speichert.

3. Verfahren nach Anspruch 1 oder 2,
**dadurch gekennzeichnet,**
**daß** der Meldungsserver (MWIS) die Meldung in Schritt b) an alle Endgeräte (HS1, HS2, TS1, TS2, PC) des Teilnehmers übermittelt.

4. Verfahren nach Anspruch 1 oder 2,
**dadurch gekennzeichnet,**
**daß** der Meldungsserver (MWIS) die Meldung in Schritt b) an mindestens ein vom Teilnehmer auswählbares Endgerät (HS1, HS2, TS1, TS2, PC) des Teilnehmers übermittelt.

5. Verfahren nach Anspruch 4,
**dadurch gekennzeichnet,**
**daß** die Auswahl eines Endgerätes (HS1, HS2, TS1, TS2, PC) durch den Teilnehmer mittels einer von diesem Endgerät (HS1, HS2, TS1, TS2, PC) an den Meldungsserver (MWIS) übertragenen Steuerinformation erfolgt.

6. Verfahren nach einem der Ansprüche 1 bis 5,
**dadurch gekennzeichnet,**
**daß** von jedem Nachrichtendienst beim Vorliegen einer neuen Nachricht eine Nachrichtenkopfinformation an den Meldungsserver (MWIS) übermittelt wird, und daß die Nachrichtenkopfinformation von dem Meldungsserver (MWIS) mindestens teilweise an mindestens ein Endgerät (HS1, HS2, TS1, TS2, PC) des Teilnehmers übermittelt wird, das die Nachrichtenkopfinformation mindestens teilweise auszugeben vermag.

7. Verfahren nach einem der Ansprüche 1 bis 5,
**dadurch gekennzeichnet,**
**daß** von jedem Nachrichtendienst auf eine Anforderung des Meldungsservers (MWIS) eine Nachrichtenkopfinformation an den Meldungsserver (MWIS) übermittelt wird, und daß die Nachrichtenkopfinformation von dem Meldungsserver (MWIS) mindestens teilweise an mindestens ein Endgerät (HS1, HS2, TS1, TS2, PC) des Teilnehmers übermittelt wird, das die Nachrichtenkopfinformation mindestens teilweise auszugeben vermag.

8. Verfahren nach einem der Ansprüche 2 bis 7,
**dadurch gekennzeichnet,**
**daß** der Meldungsserver (MWIS) auf eine Anforderung des Teilnehmers von einem beliebigen Endgerät zunächst eine Berechtigungsprüfung vornimmt und dann vorliegende Meldungen an dieses Endgerät übermittelt.

9. Verfahren nach einem der Ansprüche 1 bis 8,
**dadurch gekennzeichnet,**
**daß** der Meldungsserver (MWIS) die von den Nachrichtendiensten stammenden Daten bearbeitet, insbesondere filtert und/oder ordnet und/oder formatiert, um die an den Teilnehmer übermittelten Meldungen zu generieren.

10. Verfahren nach einem der Ansprüche 1 bis 9,
**dadurch gekennzeichnet,**
**daß** die Meldungen mittels einer Signalisierung an das mindestens eine Endgerät (HS1, HS2, TS1, TS2, PC) des Teilnehmers und/oder durch einen Rufaufbau übermittelt werden.

## Claims

1. Method for indicating a message to a subscriber who is registered with at least two message services, wherein:
a) each message service indicates to a common message waiting indication server (MWIS) at least the presence of a new message for the subscriber at this message service, and
b) the message waiting indication server (MWIS) transmits to at least one terminal device (HS1, HS2, TS1, TS2, PC) of the subscriber an indication containing at least the information that the new message is present, and in which message service it is present.

2. Method according to claim 1,
**characterised in that**
when a message service indicates the presence of a new message, the message waiting indication server (MWIS) stores the data originating from the message service at least in part and at least until the corresponding indication is successfully transmitted.

3. Method according to claim 1 or 2,
**characterised in that**
the message waiting indication server (MWIS) transmits the indication in step b) to all terminal devices (HS1, HS2, TS1, TS2, PC) of the subscriber.

4. Method according to claim 1 or 2,
**characterised in that**
the message waiting indication server (MWIS) transmits the indication in step b) to at least one terminal device (HS1, HS2, TS1, TS2, PC) of the subscriber which can be selected by the subscriber.

5. Method according to claim 4,
**characterised in that**
the selection of a terminal device (HS1, HS2, TS1, TS2, PC) by the subscriber is made by means of control information transmitted to the message waiting indication server (MWIS) by said terminal device (HS1, HS2, TS1, TS2, PC).

6. Method according to one of claims 1 to 5,
**characterised in that**
when a new message is present, message header information is transmitted to the message waiting indication server (MWIS) by each message service, and that the message header information is transmitted by the message waiting indication server (MWIS) at least in part to at least one terminal device (HS1, HS2, TS1, TS2, PC) of the subscriber which is capable of outputting the message header information at least in part.

7. Method according to one of claims 1 to 5,
**characterised in that**
in response to a request from the message waiting indication server (MWIS), message header information is transmitted to the message waiting indication server (MWIS) by each message service, and that the message header information is transmitted by the message waiting indication server (MWIS) at least in part to at least one terminal device (HS1, HS2, TS1, TS2, PC) of the subscriber which is capable of outputting the message header information at least in part.

8. Method according to one of claims 2 to 7,
**characterised in that**
in response to a request from the subscriber from any terminal device, the message waiting indication server (MWIS) first carries out an authorisation check and then transmits indications that are present to said terminal device.

9. Method according to one of claims 1 to 8,
**characterised in that**
the message waiting indication server (MWIS) processes the data originating from the message services, in particular filters and/or sorts and/or formats it, in order to generate the indications transmitted to the subscriber.

10. Method according to one of claims 1 to 9,
**characterised in that**
the indications are transmitted by means of signalling information to the at least one terminal device (HS1, HS2, TS1, TS2, PC) of the subscriber and/or by means of a call setup.

## Revendications

1. Procédé pour notifier un message à un abonné enregistré auprès d'au moins deux services de messagerie :
a) chaque service de messagerie indiquant à un serveur de notification commun (MWIS) au moins la présence d'un nouveau message pour l'abonné dans ce service de messagerie et
b) le serveur de notification (MWIS) transmettant à au moins un terminal (HS1, HS2, TS1, TS2, PC) de l'abonné une notification indiquant au moins que le nouveau message est présent et dans quel service de messagerie il est présent.

2. Procédé selon la revendication 1, **caractérisé en ce que**, lorsqu'un service de messagerie indique la présence d'un nouveau message, le serveur de notification (MWIS) enregistre les données provenant du service de messagerie au moins partiellement et au moins jusqu'à une transmission réussie de la notification correspondante.

3. Procédé selon la revendication 1 ou 2, **caractérisé en ce que** le serveur de notification (MWIS) transmet la notification, dans l'étape b), à tous les terminaux (HS1, HS2, TS1, TS2, PC) de l'abonné.

4. Procédé selon la revendication 1 ou 2, **caractérisé en ce que** le serveur de notification (MWIS) transmet la notification, dans l'étape b), à au moins un terminal (HS1, HS2, TS1, TS2, PC) de l'abonné pouvant être sélectionné par l'abonné.

5. Procédé selon la revendication 4, **caractérisé en ce que** la sélection d'un terminal (HS1, HS2, TS1, TS2, PC) est exécutée par l'abonné au moyen d'une information de commande transmise au serveur de notification (MWIS) par ce terminal (HS1, HS2, TS1, TS2, PC).

6. Procédé selon l'une des revendications 1 à 5, **caractérisé en ce qu'**une information d'en-tête de message est transmise au serveur de notification (MWIS) par chaque service de messagerie en cas de présence d'un nouveau message et **en ce que** l'information d'en-tête de message est transmise au moins partiellement par le serveur de notification (MWIS) à au moins un terminal (HS1, HS2, TS1, TS2, PC) de l'abonné qui est capable de délivrer, au moins partiellement, l'information d'en-tête de message.

7. Procédé selon l'une des revendications 1 à 5, **caractérisé en ce qu'**une information d'en-tête de message est transmise au serveur de notification (MWIS) par chaque service de messagerie sur demande du serveur de notification (MWIS) et **en ce que** l'information d'en-tête de message est transmise au moins partiellement par le serveur de notification (MWIS) à au moins un terminal (HS1, HS2, TS1, TS2, PC) de l'abonné qui est capable de délivrer, au moins partiellement, l'information d'en-tête de message.

8. Procédé selon l'une des revendications 2 à 7, **caractérisé en ce que** le serveur de notification (MWIS) procède d'abord, sur demande de l'abonné depuis un terminal quelconque, à une vérification d'autorisation, puis transmet les notifications présentes à ce terminal.

9. Procédé selon l'une des revendications 1 à 8, **caractérisé en ce que** le serveur de notification (MWIS) traite les données provenant des services de messagerie, notamment les filtre et/ou les ordonne et/ou les formate, pour générer les notifications transmises à l'abonné.

10. Procédé selon l'une des revendications 1 à 9, **caractérisé en ce que** les notifications sont transmises à l'au moins un terminal (HS1, HS2, TS1, TS2, PC) de l'abonné au moyen d'une signalisation et/ou grâce à un établissement d'appel.
